# EUROPÄISCHE PATENTSCHRIFT

(11) **EP 4 145 195 B1**
(45) Veröffentlichungstag und Bekanntmachung des Hinweises auf die Patenterteilung: **02.10.2024**
(21) Anmeldenummer: 21194559.7
(22) Anmeldetag: 02.09.2021
(51) Int. Cl.: G02B 6/00

(54) **STECKERSTIFT FÜR EINEN FASEROPTISCHEN STECKVERBINDER, SET AUS MEHREREN STECKERSTIFTEN, FASEROPTISCHER STECKVERBINDER UND VERFAHREN ZUR HERSTELLUNG EINES STECKERSTIFTS**
CONNECTOR PLUG FOR A FIBRE OPTIC CONNECTOR, SET COMPRISING MULTIPLE CONNECTOR PLUGS, FIBRE OPTIC CONNECTOR AND METHOD OF MANUFACTURING A CONNECTOR PLUG
BROCHE DE CONNECTEUR ENFICHABLE POUR UN CONNECTEUR ENFICHABLE DE FIBRE OPTIQUE, ENSEMBLE COMPOSÉ DE PLUSIEURS BROCHES DE CONNECTEUR ENFICHABLE, CONNECTEUR ENFICHABLE DE FIBRE OPTIQUE ET PROCÉDÉ DE FABRICATION D'UNE BROCHE DE CONNECTEUR ENFICHABLE

(43) Veröffentlichungstag der Anmeldung: 08.03.2023
(73) Patentinhaber: Diamond SA, 6616 Losone (CH)
(72) Erfinder: Gerber, Hans, 6648 Minusio (CH); Coggi, Victor, 6616 Losone (CH); Rossetto, Aron, 6648 Minusio (CH)
(74) Vertreter: Hepp Wenger Ryffel AG

(56) Entgegenhaltungen:
- EP-A2- 0 123 134
- CH-A1- 706 681
- DE-A1- 3 112 000

## Beschreibung

Die vorliegende Erfindung betrifft einen Steckerstift für einen faseroptischen Steckverbinder, ein Set aus mehreren Steckerstiften, einen faseroptischer Steckverbinder und ein Verfahren zur Herstellung eines Steckerstifts gemäss den Oberbegriffen der unabhängigen Ansprüche.

In der Lichtwellenleiter-Übertragungstechnik ist es relevant, dass bei einer Steckverbindung zweier Lichtwellenleiter deren Kerne präzise aufeinander ausgerichtet zusammengeführt werden. Hierzu sind im Stand der Technik verschiedene Methoden bekannt.

Bei einem klassischen Monoblock-Steckerstift wird die zentrale Bohrung, welche den Lichtwellenleiter aufnimmt, sehr eng gegenüber dem Aussendurchmesser toleriert. Um eine möglichst präzise Ausrichtung des Lichtwellenleiterkerns zu gewährleisten, wird beim fertig konfektionierten Steckverbinder der Steckerstift um seine Längsachse gedreht, um den Kern des Lichtwellenleiters in einer vorbestimmten und normierten Winkelposition gegenüber dem geometrischen Zentrum des Aussendurchmessers zu positionieren.

Alternative Verfahren sind bekannt. So wird beispielsweise in der DE 27 04 140 A1 ein Steckerstift mit einem Einsatz offenbart, wobei nach dem Bestücken des Einsatzes mit einer Faser der Einsatz präzise in den Steckerstift eingeklebt wird.

Weitere Verfahren bedienen sich der aktiven Kernzentrierung, beispielsweise EP 0 402 581 A2 oder EP 0 354 173 A1. Hier wird ein Steckerstift mit einem duktilen Einsatz versehen, welcher dann den Lichtwellenleiter aufnimmt. Nach dem Bestücken kann dann der duktile Einsatz gezielt durch eine Nachprägung verformt werden, so dass der Kern des Lichtwellenleiters in das geometrische Zentrum gerückt werden kann.

Die US 6,877,910 B2 offenbart einen Steckerstift mit einem Einsatz, wobei beim Zusammenfügen von Steckerstift und Einsatz der Einsatz gedreht wird, so dass dessen Bohrung möglichst koaxial zum Zentrum des Aussendurchmessers zu liegen kommt. In dieser Position wird der Einsatz fixiert. DE 31 12 000 A1 offenbart ebenfalls einen Steckerstift des Stands der Technik.

Nachteilig am Stand der Technik ist, dass jeweils eine Ausrichtung erst nach dem Bestücken der Faser erfolgen kann oder eine komplizierte Vorrichtung zum Ausrichten von Steckerstift und Einsatz benötigt wird.

Es ist eine Aufgabe der Erfindung, die Nachteile des Standes der Technik zu überwinden. Insbesondere sollen ein Steckerstift für einen faseroptischen Steckverbinder, ein Set aus mehreren Steckerstiften, ein faseroptischer Steckverbinder und ein Verfahren zur Herstellung eines Steckerstifts zur Verfügung gestellt werden, sodass eine Ausrichtung des Lichtwellenleiterkerns nach dem Bestücken des Steckerstiftes mit einer Faser nicht mehr nötig ist.

Diese Aufgabe wird durch die in den unabhängigen Patentansprüchen definierten Vorrichtungen und Verfahren gelöst. Weitere Ausführungsformen ergeben sich aus den abhängigen Patentansprüchen.

Ein erfindungsgemässer Steckerstift für einen faseroptischen Steckverbinder umfasst eine hohlzylinderförmige Hülse mit einer zentralen Hülsenachse, einem Aussendurchmesser und einem Innendurchmesser sowie ein Endstück mit einer im Wesentlichen zentralen Bohrung mit einer Bohrungsachse und einem Bohrungsdurchmesser. Dabei ist das Endstück an einer Stirnfläche der Hülse angeordnet und bildet eine Endfläche des Steckerstifts. Die Bohrungsachse ist koaxial mit der Hülsenachse ausgerichtet und weist eine Exzentrizität von weniger als 1.0 µm, bevorzugt weniger als 0.8 µm, besonders bevorzugt weniger als 0.5 µm, aufweist. Unter der Exzentrizität wird vorliegend der Abstand zwischen der Bohrungsachse und der Hülsenachse gemessen an der Stirnfläche verstanden.

Hier und im Folgenden wird unter der Hülsenachse diejenige Achse verstanden, welche durch den Aussendurchmesser der Hülse definiert ist. Unter der Bohrungsachse des Endstücks wird entsprechend diejenige Achse verstanden, welche durch den Bohrungsdurchmesser definiert wird.

Unter der Stirnfläche der Hülse wird dasjenige Ende der Hülse verstanden, welches bei einem in einem Steckverbinder eingesetzten Steckerstift einem zu verbindenden Steckerstift eines korrespondierenden Steckverbinders zugewandt ist.

Durch die Verwendung einer Hülse und eines an einer Stirnfläche dieser Hülse angeordneten Endstücks kann eine Ausrichtung der Hülsenachse mit der Bohrungsachse des Endstücks präzise erfolgen. Durch die Ausrichtung der beiden Achsen mit einer Exzentrizität von weniger als 1.0 µm, bevorzugt weniger als 0.8 µm, besonders bevorzugt weniger als 0.5 µm, kann auf eine Kernzentrierung nach dem Bestücken des Steckerstiftes mit einem Lichtwellenleiter verzichtet werden. Der Arbeitsaufwand beim Erstellen von Lichtwellenleiter-Steckverbindern kann wesentlich reduziert werden.

Der Innendurchmesser der Hülse kann derart dimensioniert sein, um den verwendenden Lichtwellenleiter mit seiner Schutzbeschichtung oder sogar mit seiner äusseren Hülle aufnehmen zu können. Dabei ist es vorteilhaft, wenn der Innendurchmesser grösser, insbesondere 100 µm bis 300 µm, als der Aussendurchmesser der Schutzbeschichtung oder der äusseren Hülle des Lichtwellenleiters ist. Das Einführen der Faser in die Hülse wird somit wesentlich vereinfacht und die Schutzbeschichtung oder die äussere Hülle kann einfach eingeklebt werden. Selbstverständlich kann der Innendurchmesser auch mehrere Stufen aufweisen, sodass beispielsweise die Schutzbeschichtung eines Lichtwellenleiters und auch der Mantel eines entsprechenden Lichtwellenleiterkabels eingeklebt werden kann.

Die Hülsenachse kann zur Bohrungsachse einen Winkelversatz von weniger als 0.3°, bevorzugt weniger als 0.2°, besonders bevorzugt weniger als 0.1°, aufweisen. Durch einen geringen Winkelversatz kann sichergestellt werden, dass der resultierende Schielwinkel nach dem Bestücken des Lichtwellenleiters möglichst gering ist. Entsprechend können Steckverbinder mit sehr geringen Verlusten hergestellt werden.

Der Aussendurchmesser der Hülse kann eine Rundheit von < 0.3 µm, bevorzugt von < 0.2 µm, besonders bevorzugt von < 0.1 µm, aufweisen. Da bei faseroptischen Steckverbindern die Ausrichtung der Lichtwellenleiter zueinander über den Aussendurchmesser des Steckerstiftes und eine Zentrierhülse erfolgt, ermöglicht eine präzise Rundheit des Aussendurchmesser eine Steckverbindung mit geringen Verlusten.

Der Aussendurchmesser der Hülse kann eine Toleranz von weniger als 0.5 µm, bevorzugt weniger als 0.3 µm, besonders bevorzugt weniger als 0.2 µm, aufweisen. Eine solche enge Toleranz des Durchmessers stellt sicher, dass zwei Steckerstifte von zwei zu verbindenden Steckverbindern präzise mit einer Zentrierhülse aufeinander ausgerichtet werden können, so dass eine Steckverbindung mit sehr geringen Verlusten ermöglicht wird.

Der Bohrungsdurchmesser des Endstücks entspricht im Wesentlichen dem Aussendurchmesser des zu verwendenden Lichtwellenleiters und ist vorzugsweise 1.0 µm grösser dimensionierte als der Lichtwellenleiter. Der Bohrungsdurchmesser kann eine Toleranz von weniger als 0.5 µm, bevorzugt weniger als 0.4 µm, besonders bevorzugt weniger als 0.3 µm, aufweisen. Eine solche enge Toleranz des Bohrungsdurchmessers stellt sicher, dass durch das Einkleben des Lichtwellenleiters eine möglichst geringe Exzentrizität resultiert. Die dadurch verbundene Reduktion der Toleranzkette führt zu einer weiteren Optimierung der präzisen Ausrichtung der Lichtwellenleiterkerne einer Steckverbindung.

Das Endstück ist an der Stirnfläche der Hülse verklebt, und kann ausschliesslich an der Stirnfläche der Hülse verklebt sein. Die Stirnfläche kann dazu vollständig eben ausgebildet sein oder ebene Abschnitte aufweisen. Eine solche Verklebung an der Stirnfläche stellt sicher, dass eine optimale Verbindung zwischen Hülse und Endstück hergestellt ist. Bei einer ausschliesslichen Verklebung an der Stirnfläche kann die radiale Verschiebung des Endstückes beim Aushärten des Klebers reduziert oder ganz verhindert werden. Bei einer Verklebung eines Einsatzes in einem Rohr kann es beim Aushärten des Klebstoffes zu einer radialen Verschiebung des Einsatzes kommen. Der Einsatz wird durch den aushärtenden Klebstoff einseitig an die Innenwand des Rohres gezogen. Durch eine Verklebung ausschliesslich an der Stirnseite wird das Endstück allseitig an die Stirnfläche gezogen. Es resultiert keine radiale Verschiebung.

Das Endstück kann derart ausgestaltet sein, dass es wenigstens teilweise in die hohlzylindrische Hülse eingreift. Durch ein Eingreifen des Endstücks in die Hülse kann eine mechanisch stärkere Verbindung zwischen Endstück und Hülse sichergestellt werden. Hierzu kann beispielsweise die Hülse stirnseitig eine vergrösserte Bohrung aufweisen, so dass das Endstück darin eingreifen kann. Vorzugsweise weist hierzu das Endstück einen gestuften Aussendurchmesser auf, wobei ein erster kleinerer Aussendurchmesser des Endstücks in die Bohrung der Hülse eingreifen kann. Ein Abschnitt mit einem zweiten, grösseren Aussendurchmesser des Endstücks weist eine axiale Kontaktfläche auf, mit welcher der Kontakt mit der Stirnfläche der Hülse hergestellt werden kann.

Zwischen einer durch den Innendurchmesser gebildeten Innenfläche der hohlzylindrischen Hülse und einer vorzugsweise zylinderförmigen Aussenfläche des Endstücks kann ein umlaufender Luftspalt ausgebildet sein. Bei einer geeigneten Dimensionierung kann der Luftspalt verhindern, dass der Klebstoff zwischen Kontaktfläche und Stirnfläche durch Kapillarwirkung in den Luftspalt gezogen wird. Endsprechend kann eine durch das Aushärten des Klebstoffes bedingte radiale Verschiebung des Einsatzes beim Verkleben an der Hülse verhindert werden. Die Breite des Luftspaltes beträgt dabei vorzugsweise 0.1 mm bis 0.2 mm. Die Breite des Luftspaltes wird vorzugsweise abhängig von dem verwendeten Klebstoff und insbesondere dessen Viskosität definiert.

Der Innendurchmesser der Hülse kann gestuft sein und wenigstens zwei, vorzugsweise drei oder vier, insbesondere unterschiedliche Innendurchmesser aufweisen. Ein gestufter Innendurchmesser der Hülse ist vorteilhaft, um die Fixierung und die Einführung des Lichtwellenleiters zu vereinfachen. So kann beispielsweise die Hülse an ihrem der Stirnfläche abgewandten Ende einen grösseren Innendurchmesser aufweisen, um eine erste Schutzbeschichtung (Coating) des Lichtwellenleiters aufnehmen zu können. Erst im Bereich weiter zur Stirnfläche wird der Innendurchmesser dann weiter reduziert, um den Lichtwellenleiter auf die Bohrung des Endstücks auszurichten. Selbstverständlich sind auch weitere Durchmesserstufen denkbar, so dass ein Mantel des Lichtwellenleiters ebenfalls aufgenommen werden kann. Stirnseitig ist ein vergrösserter Innendurchmesser dann vorteilhaft, wenn das Endstück in die Hülse eingreift. Die einzelnen Innendurchmesser sind auf die jeweilige Gegebenheit angepasst und können unterschiedliche Durchmesser aufweisen.

Die Hülse und/oder das Endstück des Steckerstifts können ein keramisches Material, vorzugsweise Zirconiumdioxid, umfassen oder daraus besteht. Keramische Materialien haben sich in der faseroptischen Verbindungstechnik etabliert. Selbstverständlich können aber auch andere Materialen wie beispielsweise Metall, insbesondere Stahl, Neusilber, Titan, verwendet werden. Insbesondere kann die Hülse auch aus Hartmetall, beispielsweise Tungsten-Carbide, bestehen. Für das Endstück sind auch Materialien wie Kupfer, Glas oder Saphir denkbar.

Die Hülse kann eine Markierung, insbesondere eine Farbmarkierung aufweisen, insbesondere eingefärbt sein. Durch eine insbesondere farbliche Markierung kann beispielsweise die Grösse des Bohrungsdurchmessers des eingesetzten Endstücks gekennzeichnet werden. Ebenso ist es denkbar, dass über die Farbmarkierung eine Information zur Fertigungstoleranz, beispielsweise zur Exzentrizität von Bohrungsachse zur Hülsenachse, kodiert wird.

Ein weiterer Aspekt der vorliegenden Erfindung betrifft ein Set umfassend mehrere Steckerstifte wie vorgängig beschrieben, wobei die Bohrungsdurchmesser der Endstücke unterschiedlich dimensioniert und/oder toleriert sind. Bei der Herstellung eines Steckverbinders kann somit jeweils derjenige Steckerstift ausgewählt werden, welcher die benötigten Anforderungen erfüllt. Die Produktion kann somit effizient betrieben werden. Bei der Herstellung der Steckerstifte kann bewusst aussortiert werden, wobei diejenigen Steckerstifte mit einer grösseren Toleranz für preiswerte Lösungen mit geringeren Anforderungen an die Präzision verwendet werden. Für die höchsten Anforderungen können entsprechend diejenigen Steckerstifte ausgewählt werden, welche die geringsten Toleranzen aufweisen.

Die Hülsen des Sets können dabei eine Farbkodierung anhand der Dimension und/oder der Toleranz des Bohrungsdurchmessers des Endstücks aufweisen. Somit wird deren Auswahl für die Herstellung des Steckverbinders erleichtert.

Ein weiterer Aspekt der vorliegenden Erfindung betrifft einen faseroptischer Steckverbinder umfassend wenigstens einen Steckerstift wie vorgängig beschrieben.

Ein weiterer Aspekt der vorliegenden Erfindung betrifft ein Verfahren zur Herstellung eines Steckerstifts für einen faseroptischen Steckverbinder, insbesondere eines Steckerstifts wie vorgängig beschrieben, umfassen die Schritte:
- Bereitstellen einer im Wesentlichen hohlzylinderförmigen Hülse mit einer zentralen Hülsenachse und einem Aussendurchmesser,
- Bereitstellen eines Endstücks mit einer im Wesentlichen zentralen Bohrung mit einer Bohrungsachse und einem Bohrungsdurchmesser,
- Fixieren des Endstücks an einer Stirnfläche der Hülse,

Die Bohrungsachse mit der Hülsenachse wird dabei derart koaxial ausgerichtet werden, dass eine Exzentrizität von weniger als 1.0 µm, bevorzugt weniger als 0.8 µm, besonders bevorzugt weniger als 0.5 µm, resultiert.

Durch die Ausrichtung der beiden Achsen mit einer resultierenden Exzentrizität von weniger als 1.0 µm, bevorzugt weniger als 0.8 µm, besonders bevorzugt weniger als 0.5 µm, kann bei einer Verwendung des Steckerstiftes in einem Steckverbinder auf eine Kernzentrierung nach dem Bestücken mit einem Lichtwellenleiter verzichtet werden. Der Arbeitsaufwand beim Erstellen von Lichtwellenleiter-Steckverbindern kann wesentlich reduziert werden.

Das Fixieren des Endstücks an der Stirnfläche erfolgt mittels eines Klebstoffes. Beispielsweise können 2-Komponenten Epoxy-Klebstoffe verwendet werden. Die Aushärtung des Klebstoffes erfolgt vorzugsweise langsam und über mehrere Stunden. Es ist aber auch denkbar, dass Klebstoffe verwendet werden, welche mittels ultravioletter Strahlung aushärte. Ebenso sind Hybridklebstoffe denkbar. Beispielsweise kann Epotek 353ND, Epotek OG198-54 oder Loctite 3924 als Klebstoff verwendet werden.

Die Verwendung von Klebstoffen ist in der faseroptischen Verbindungstechnik bereits für das Einkleben des Lichtwellenleiters in den Steckerstift bekannt. Selbstverständlich sind aber je nach verwendeten Materialien von Hülse und Endstück auch andere Verfahren zum Fixieren denkbar.

Wenn für das Fixieren des Endstücks ein Klebstoff verwendet wird, kann während des Aushärtens des Klebstoffs die Bohrungsachse mit der Hülsenachse koaxial ausgerichtet gehalten werden.

Ein solches Festhalten verhindert ein "Wandern" oder Verschieben des Endstücks gegenüber der Hülse während des Aushärtens.

Zum Ausrichten der Hülsenachse mit der Bohrungsachse kann das Endstück auf einen Führungsstift eines Referenzstiftes aufgesetzt werden. Dieser Referenzstift hat vorzugweise denselben Aussendurchmesser wie die Hülse, an welcher das Endstück angeordnet werden soll. Der Führungsstift soll dabei einen Aussendurchmesser aufweisen, welcher koaxial zum Aussendurchmesser des Referenzstiftes ausgerichtet ist. Des Weiteren weist der Führungsstift vorzugweise einen Aussendurchmesser auf, welcher lediglich geringfügig kleiner als der Bohrungsdurchmesser des Endstücks ist, so dass das Endstück möglichst spielfrei auf dem Führungsstift sitzt. Der Referenzstift mit Endstück kann nun von einer ersten Seite in eine geschlitzte Zentrierhülse eingesetzt und die Hülse von einer zweiten Seite in die Zentrierhülse eingeführt werden. Die Zentrierhülse kann dabei eine herkömmliche, in der faseroptischen Verbindungstechnik üblicherweise verwendete, Zentrierhülse sein. Beispielsweise kann der Referenzstift ein Steckerstift mit einem eingesetzten Faserstummel sein. Dabei ist jedoch zu beachten, dass sowohl der Steckerstift als auch der Faserstummel sehr genaue und vor allem auch bekannte Durchmesser aufweisen müssen und in der geforderten Präzision bezüglich der Exzentrizität aufeinander ausgerichtet sein müssen. Die Exzentrizität beträgt dabei weniger als 1.0 µm, bevorzugt weniger als 0.8 µm, besonders bevorzugt weniger als 0.5 pm.

Alternativ können der Referenzstift und der Führungsstift auch durch herkömmliche mechanische Bearbeitungsmethoden, insbesondere einstückig, hergestellt sein.

Zum Ausrichten der Hülsenachse mit der Bohrungsachse kann anstelle des Endstücks auch die Hülse auf einen Referenzstift aufgesetzt werden. Der Referenzstift kann hierzu über eine der Innengeometrie der Hülse angepasste Kontur verfügen. Der Referenzstift weist in seinem Endbereich, also dort, wo die Hülse aufsteht, denselben Aussendurchmesser wie die Hülse auf. Ausserdem weist der Referenzstift einen Führungsstift auf, welcher durch die Hülse hindurchragt und aus der Hülse vorsteht. Dieser Führungsstift ist koaxial zum Aussendurchmesser des Referenzstiftes ausgerichtet. Ausserdem weist der Führungsstift einen Aussendurchmesser auf, welcher lediglich geringfügig kleiner als der Innendurchmesser des Endstücks ist. Somit kann darauf das Endstück spielfrei aufgenommen und ausgerichtet werden. Die Hülse wird über ihren Aussendurchmesser und eine herkömmliche Zentrierhülse auf dem Aussendurchmesser des Referenzstiftes ausgerichtet. Die Stirnfläche der Hülse ragt dabei aus der Zentrierhülse hervor. In diesem Zustand wird auf der Stirnfläche der Hülse ein Klebstoff appliziert.

Jetzt kann das Endstück auf den Führungsstift aufgesteckt und in Richtung zur Stirnfläche der Hülse bewegt werden. Um ein Verschieben des Führungsstiftes zu verhindern, wird hinter dem Endstück ein weiterer Referenzstift in einer Zentrierhülse auf die Hülse aufgeschoben. Der weitere Referenzstift weist eine zentrale Bohrung auf, welche präzise auf den Aussendurchmesser des weiteren Referenzstiftes ausgerichtet ist. Der Führungsstift wird somit beidseits präzise geführt und kann nötigenfalls während dem Aushärten des Klebstoffes sogar gespant werden.

Anhand von Figuren, welche lediglich Ausführungsbeispiele darstellen, wird die Erfindung im Folgenden näher erläutert. Es zeigen:
- Figur 1:: einen Längsschnitt durch einen erfindungsgemässen Steckerstift,
- Figur 2:: einen Längsschnitt durch eine weitere Ausführungsform eines Steckerstifts, der nicht Teil der beanspruchten Erfindung ist,

- Figur 3:: einen Längsschnitt durch eine weitere Ausführungsform eines erfindungsgemässen Steckerstifts,
- Figur 4:: eine Anordnung zur Herstellung eines erfindungsgemässen Steckerstifts,
- Figur 5:: einen Längsschnitt durch ein Endstück eines erfindungsgemässen Steckerstifts gemäss Figur 3,
- Figur 6:: einen Längsschnitt durch eine Hülse einer weiteren Ausführungsform eines erfindungsgemässen Steckerstifts.

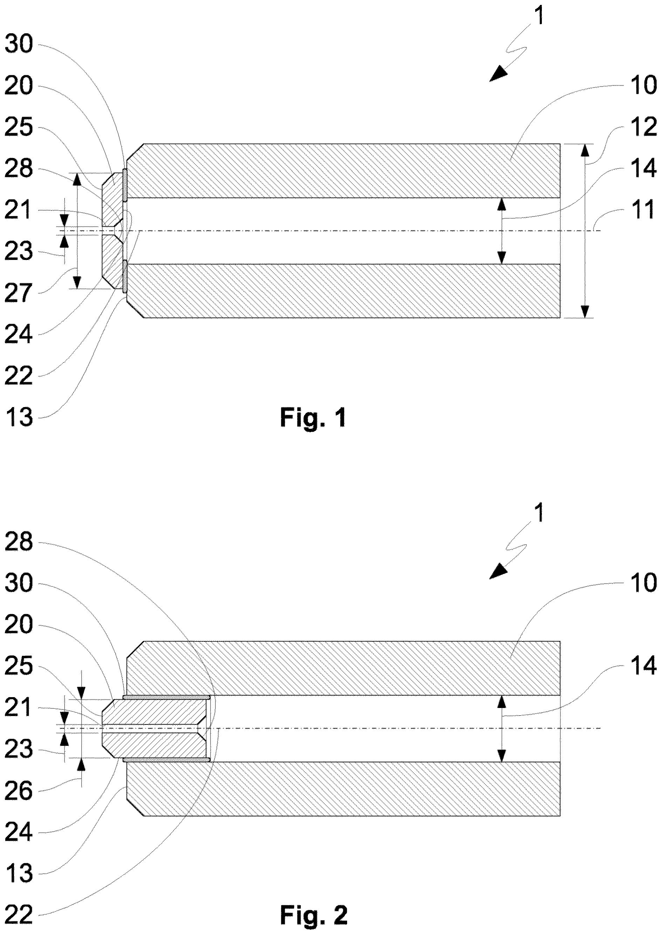

Die Figur 1 zeigt einen Längsschnitt durch einen erfindungsgemässen Steckerstift 1. Der Steckerstift 1 besteht im Wesentlichen aus einer hohlzylinderförmigen Hülse 10 und einem Endstück 20, welches an einer Stirnfläche 13 der Hülse 10 angeordnet ist. Die Hülse 10 weist einen Aussendurchmesser 12 auf, welcher eine Hülsenachse 11 definiert. Ausserdem weist die Hülse 10 einen Innendurchmesser 14 auf. In die durch den Innendurchmesser 14 definierte Bohrung kann bei Verwendung des Steckerstifts 1 in einem Steckverbinder ein Lichtwellenleiter eingeführt und eingeklebt werden. Die Hülse 10 im gezeigten Ausführungsbeispiel weist stirnseitig eine optionale Fase auf, so dass ein Einführen des Steckerstifts 1 in eine Zentrierhülse beim Erstellen einer faseroptischen Verbindung erleichtert wird. Vorzugsweise weist der Aussendurchmesser 12 des Steckerstifts 1 über den Umfang und die Länge des Steckerstifts 1 eine Rundheit von ≤ 0.2 pm auf und beträgt 2.5 mm -0.0008/-0.001 mm. Selbstverständlich sind für andere Steckverbinder auch andere Dimensionen denkbar. Die Dimensionen des Innendurchmessers 14 sind nicht zwingend eng toleriert. Auch dessen Ausrichtung in Bezug auf den Aussendurchmesser 12 muss keine strengen Anforderungen erfüllen.

Das Endstück 20 hat eine Form einer flachen Scheibe mit einer zentralen Bohrung 21, welche eine Bohrungsachse 22 definiert. Der Bohrungsdurchmesser 23 ist auf den zu verwendenden Lichtwellenleiter angepasst und beträgt in der dargestellten Ausführungsform 126 pm ± 0.5 pm. Selbstverständlich sind auch andere Dimensionen denkbar. Das Endstück 20 weist eine Endfläche 25 auf, welche die Endfläche des Steckerstifts 1 bildet. Der Rand dieser Endfläche 25 weist optional eine Fase auf, so dass keine scharfe Kante vorhanden ist. Das Endstück 20 weist ausserdem einen Aussendurchmesser 27 auf, welcher kleiner ist, als der Aussendurchmesser 12 der Hülse 10. Der Aussendurchmesser 27 des Endstücks 20 ist nicht zwingend eng toleriert und muss in Bezug auf den Innendurchmesser 23 keine strengen Anforderungen erfüllen.

Die Bohrung 21 des Endstücks 20 ist präzise koaxial auf den Aussendurchmesser 12 der Hülse ausgerichtet. Die Bohrungsachse 22 und die Hülsenachse 11 liegen idealerweise aufeinander und weisen eine Exzentrizität von weniger als 0.5 µm auf. Der Winkelversatz ist dabei kleiner als 0.2°.

Auf der der Endfläche 25 gegenüberliegenden Seite weist das Endstück 20 eine Endfläche 24 auf, mit welcher das Endstück 20 mittels eines Klebstoffes 30 an der Stirnfläche 13 der Hülse 10 befestigt ist. Auf dieser Seite ist die Bohrung 21 mit einem Einlauftrichter 28 versehen, welcher das Einführen eines Lichtwellenleiters erleichtert.

In der Figur 2 ist eine weitere Ausführungsform, die nicht Teil der beanspruchten Erfindung ist, eines Steckerstifts 1 im Querschnitt dargestellt. Der Steckerstift 1 besteht wiederum im Wesentlichen aus einer hohlzylinderförmigen Hülse 10 und einem Endstück 20. Die Hülse 10 ist wie in Figur 1 ausgestaltet.

Das Endstück 20 unterscheidet sich vom Endstück der Figur 1 und ist zylinderförmig ausgestaltet. Das Endstück 20 weist wiederum eine zentrale Bohrung 21 mit einem Bohrungsdurchmesser 23 von in der dargestellten Ausführungsform 126 µm ± 0.5 µm auf. Durch diese Bohrung 21 wird wiederum eine Bohrungsachse 22 definiert. Im Gegensatz zur Figur 1 liegt das Endstück 20 nicht flach auf der Stirnfläche 13 der Hülse 10 auf, sondern ist teilweise in die Hülse 10 eingesteckt. Eine Kontaktfläche 24 des Endstücks 20 wird somit durch die Aussenseite des Endstücks 20 gebildet und weist einen Aussendurchmesser 26 auf, welcher kleiner dimensioniert ist, als der Innendurchmesser 14 der Hülse 10. Das Endstück 20 ist mittels eines Klebstoffs 30 in die Hülse 10 eingeklebt, so dass eine Endfläche 25 des Endstücks 20 über die Stirnfläche 13 der Hülse 10 vorsteht. Der Rand der Endfläche 25 weist eine optionale Fase auf. Die Bohrung 21 weist auf der der Endfläche 25 gegenüberliegenden Seite einen Einlauftrichter 28 zum einfacheren Einführen eines Lichtwellenleiters auf.

Der Innendurchmesser 14 der Hülse 10 und der Aussendurchmesser 26 des Endstücks 20 sind nicht präzise aufeinander abgestimmt. Durch den Klebstoff kann auch ein grösserer Abstand überwunden werden. Die Bohrung 21 des Endstücks 20 ist wie bereits in der Ausführungsform der Figur 1 präzise koaxial auf den Aussendurchmesser 12 der Hülse ausgerichtet.

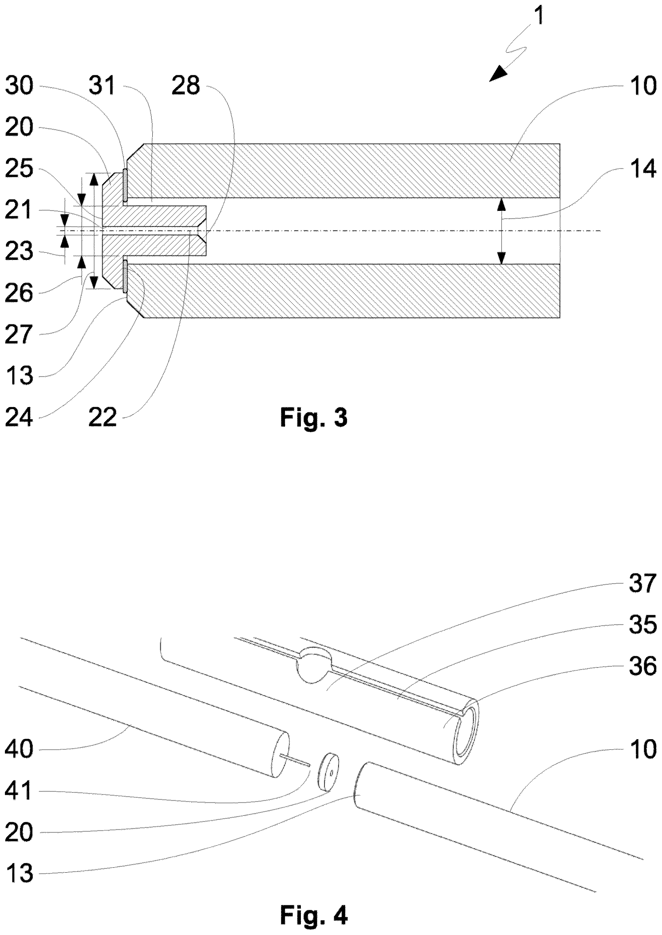

Die Figur 3 zeigt eine weitere Ausführungsform eines erfindungsgemässen Steckerstifts 1, wiederum mit einer Hülse 10 und einem Endstück 20. Die Hülse 10 ist wie in den Figuren 1 und 2 ausgestaltet.

Das Endstück 20 ist eine Kombination der beiden vorgängig beschriebenen Endstücke. Es weist einen vorderen, der Endfläche 25 zugewandten Bereich auf, welcher mit einer Kontaktfläche 24 mittels eines Klebstoffes 30 auf die Stirnseite 13 der Hülse 10 aufgeklebt ist. Ein der Endfläche 25 abgewandter Bereich des Endstücks 20 ist derart ausgestaltet, dass er in dem Innendurchmesser 14 der Hülse 10 Platz findet. Entsprechend ist der Aussendurchmesser 26 dieses Bereichs kleiner als der Innendurchmesser der Hülse 10. Es wird ein Luftspalt 31 ausgebildet, welcher nicht vom Klebstoff 30 befüllt ist. Damit das Endstück 20 an der Stirnfläche 13 der Hülse 10 anliegen kann, weist der vordere Bereich des Endstücks 20 einen äusseren Aussendurchmesser 27 auf, welcher grösser als der Innendurchmesser 14 der Hülse 10 ist.

Das Endstück 20 weist wiederum eine zentrale Bohrung 21 mit einem Bohrungsdurchmesser 23 in der dargestellten Ausführungsform von 126 pm ± 0.5 pm auf. Durch diese Bohrung 21 wird wiederum eine Bohrungsachse 22 definiert. Die Bohrung 21 weist auf der der Endfläche 25 gegenüberliegenden Seite einen Einlauftrichter 28 zum einfacheren Einführen eines Lichtwellenleiters auf, während die Bohrung 21 auf der anderen Seite bündig in der Endfläche 25 endet.

Wiederum ist die Bohrung 21 des Endstücks 20 wie bereits in der Ausführungsform der Figur 1 präzise koaxial auf den Aussendurchmesser 12 der Hülse ausgerichtet. Die Bohrungsachse 22 und die Hülsenachse 11 liegen wie bereits in den Ausführungsformen der Figuren 1 und 2 aufeinander und weisen eine Exzentrizität von weniger als 0.5 pm auf. Der Winkelversatz ist dabei kleiner als 0.2° .

Anhand der Figur 4 wird das erfindungsgemässe Verfahren zur Herstellung des erfindungsgemässen Steckerstifts 1 (siehe Figuren 1 bis 3) erläutert. Wichtig bei der Herstellung des erfindungsgemässen Steckerstifts ist, dass die Hülse 10 und das Endstück 20 derart miteinander fixiert werden, dass der Aussendurchmesser der Hülse 10 präzise auf den Innendurchmesser des Endstücks 20 ausgerichtet ist, d.h. dass die Hülsenachse der Hülse 10 koaxial mit der Bohrungsachse des Endstücks 20 angeordnet ist. Hierzu wird ein Referenzstift 40 verwendet, welcher denselben Aussendurchmesser wie die zu verwendende Hülse 10 aufweist. Dieser Referenzstift 40 weist an einem Ende im Zentrum einen Führungsstift 41 auf, welcher über das Ende des Referenzstiftes 40 hinausragt. Der Führungsstift 41 weist einen Aussendurchmesser auf, welcher dem Bohrungsdurchmesser des zu verwendenden Endstücks 20 entspricht.

Für die Herstellung eines erfindungsgemässen Steckerstifts kann das Endstück 20 auf den Führungsstift 41 des Referenzstifts 40 aufgesetzt werden, bzw. wird der Führungsstift 41 des Referenzstifts 40 in die Bohrung des Endstücks 20 eingeführt.

Als weiteres Hilfsmittel wird eine Zentrierhülse 35 verwendet. Diese Zentrierhülse 35 kann eine herkömmliche Zentrierhülse eines faseroptischen Steckadapters sein und weist einen Längsschlitz 36 auf. Dank dieses Längsschlitzes 36 kann die Zentrierhülse 35 einen Innendurchmesser aufweisen, welcher leicht kleiner als der Aussendurchmesser des Referenzstifts 40 und der Hülse 10 ist. Die Zentrierhülse 35 kann sich aufweiten. Zusätzlich kann die Zentrierhülse 35 eine zentral angeordnete Öffnung 37 aufweisen, welche einen Zugang in den Innenraum der Zentrierhülse 35 erlaubt.

Von der einen Seite wird der Referenzstift 40 mit dem aufgesetzten Endstück 20 in die Zentrierhülse 35 eingeführt. Von der anderen Seite wird anschliessend die Hülse 10 in die Zentrierhülse 35 eingesetzt. Ein physikalischer Kontakt zwischen Endstück 20 und Hülse 10 wird dabei vermieden. Die Annäherung erfolgt präzise geführt bis zu einer definierten, ausgerichteten Stellung. Sobald die Hülse 10 und das Endstück 20 korrekt positioniert sind, kann durch die zentral angeordnete Öffnung 37 oder durch den Schlitz 36 ein Klebstoff, vorzugsweise mit einer Nadelkanüle, eingeführt werden. Ein geeigneter Klebstoff weist dabei eine derartige Viskosität auf, dass sich dieser durch die Kapillarwirkung zwischen Stirnfläche 13 der Hülse 10 und Kontaktfläche 24 des Endstücks 20 gleichmässig verteilt, so dass in diesem Bereich keine Luft eingeschlossen wird. Allfällig vorhandene Unebenheiten auf der Stirnfläche 13 der Hülse 10 oder der Kontaktfläche 24 des Endstücks 20 werden vom Klebstoff aufgefüllt.

Der Klebstoff wird in dieser Montageposition ausgehärtet, so dass keine Verschiebung zwischen Endstück 20 und Hülse 10 erfolgen kann.

Bei der Ausführungsform des Endstücks 20 gemäss Figur 3 wird aufgrund des grösseren Luftspalts 31 (siehe Figur 3) zwischen Aussendurchmesser 26 des Endstücks 20 und Innendurchmesser 14 der Hülse 10 der Klebstoff 30 nicht weiter eingezogen. Die Kapillarwirkung ist hier unterbrochen. Der Luftspalt 31 bleibt frei von Klebstoff.

Falls es sich beim Endstück 20 um eine Ausführungsform gemäss der Figur 2 handelt, erfolgt beim Einsetzten der Hülse 20 in die Zentrierhülse 35 ebenfalls kein physischer Kontakt zwischen Endstück 20 und Hülse 10. Die Hülse 10 wird nur soweit eingeführt, bis das Endstück 20 in die Hülse 10 eingreift. Durch die zentral angeordnete Öffnung wird dann der Klebstoff appliziert, so dass sich dieser zwischen Aussendurchmesser des Endstücks 20 und Innendurchmesser der Hülse 10 verteilt.

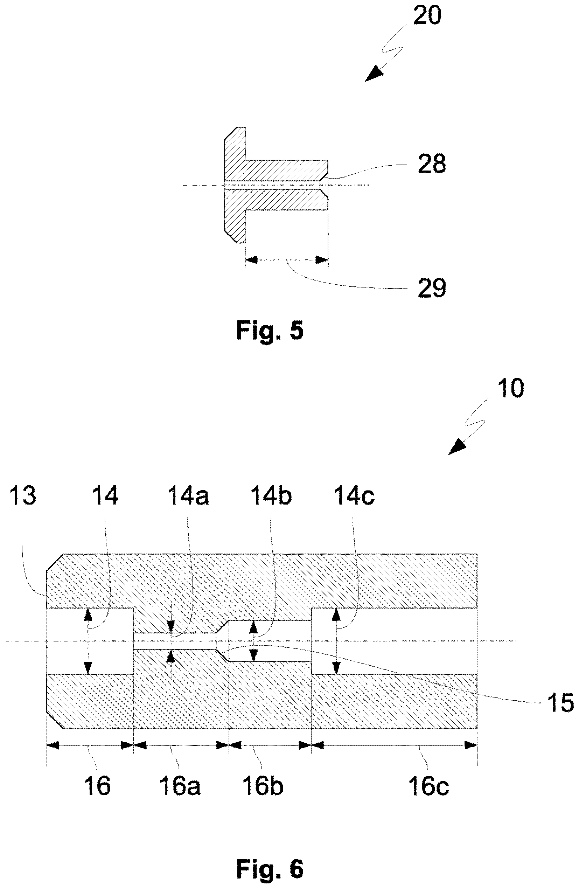

Die Figuren 5 und 6 zeigen ein Endstück 20, gemäss der Figur 3 und eine Hülse 10 gemäss einer weiteren Ausführungsform. Die Hülse 10 weist einen gestuften Innendurchmesser (14, 14a, 14b, 14c) auf, welcher verschiedene Funktionen bei der Herstellung des Steckerstiftes und anschliessend bei der Bestückung eines Steckverbinders erfüllt.

Ausgehend von der Stirnseite 13 der Hülse 10 ist der erste Innendurchmesser 14 derart dimensioniert, dass er den Aussendurchmesser 26 mit einem gewissen Spiel aufnehmen kann. Dieses Spiel wird bei der Herstellung des Steckerstiftes benötigt, so dass das Endstück 20 schwimmend auf der Stirnfläche 13 der Hülse ausgerichtet und in seiner ausgerichteten Position fixiert werden kann. Dabei soll auch in der ausgerichteten Position noch umlaufend um den Aussendurchmesser 26 des Endstücks 20 ein Luftspalt 31 (siehe Figur 3) von wenigstens 0.2 mm verbleiben, so dass keine Kapillarwirkung mit dem verwendeten Klebstoff resultiert. Die Länge 16 dieses Bereichs des Innendurchmessers 14 ist leicht grösser als die Länge 29 des Aussendurchmessers 26 des Endstücks. In der gezeigten Ausführungsform beträgt die Länge 16 1.25 mm und die Länge 29 beträgt 1.0 mm.

Anschliessend an den Bereich zur Aufnahme des Endstücks 20 folgt ein Bereich mit einer dünnen Bohrung zur Aufnahme eines Lichtwellenleiters. Dieser Bereich weist einen Innendurchmesser 14a von 500 pm auf. In diesem Bereich kann ein Lichtwellenleiter mit seiner Schutzbeschichtung (coating oder buffer) eingeklebt werden. Die Länge 16a dieses Bereichs beträgt wiederum 1.7 mm. Vorzugsweise ist dieser Bereich mit einem eingangsseitigen Einlauftrichter 15 versehen, welcher das Einführen eines Lichtwellenleiters vereinfacht.

Es folgen zwei weitere Bereiche mit unterschiedlichen Innendurchmessern 14b und 14c. Diese Bereiche dienen der Aufnahme eines ersten und zweiten Mantels des Lichtwellenleiters. Die beiden Bereiche weisen in der dargestellten Ausführungsform einen Durchmesser 14b von 1.1 mm und eine Länge 16b von 1.6 mm bzw. einen Durchmesser 14c von 1.55 mm und eine Länge 16c von 5.85 mm auf.

Selbstverständlich können die Innendurchmesser 14, 14a, 14b, 14c sowie auch die Längen 16, 16a, 16b, 16c der Bereiche entsprechend dem zu verwendenden Lichtwellenleiter bzw. dem Endstück 20 angepasst werden.

## Patentansprüche

1. Steckerstift (1) für einen faseroptischen Steckverbinder umfassend eine hohlzylinderförmige Hülse (10) mit einer zentralen Hülsenachse (11), einem Aussendurchmesser (12) und einem Innendurchmesser (14) und ein Endstück (20) mit einer im Wesentlichen zentralen Bohrung (21) mit einer Bohrungsachse (22) und einem Bohrungsdurchmesser (23), wobei das Endstück (20) an einer Stirnfläche (13) der Hülse (10) angeordnet ist und eine Endfläche (25) des Steckerstifts (1) bildet, wobei die Bohrungsachse (22) koaxial mit der Hülsenachse (11) ausgerichtet ist und eine Exzentrizität von weniger als 1.0 µm, bevorzugt weniger als 0.8 µm, besonders bevorzugt weniger als 0.5 µm, aufweist, **dadurch gekennzeichnet, dass** das Endstück (20) an der Stirnfläche (13) der Hülse (10) verklebt ist.

2. Steckerstift (1) nach Anspruch 1, wobei die Hülsenachse (11) zur Bohrungsachse (22) einen Winkelversatz von weniger als 0.3°, bevorzugt weniger als 0.2°, besonders bevorzugt weniger als 0.1°, aufweist.

3. Steckerstift (1) nach Anspruch 1 oder 2, wobei der Aussendurchmesser (12) der Hülse (10) eine Rundheit von < 0.3 µm, bevorzugt von < 0.2 µm, besonders bevorzugt von < 0.1 µm, aufweist.

4. Steckerstift (1) nach einem der vorhergehenden Ansprüche, wobei das Endstück (20) ausschliesslich an der Stirnfläche (13) der Hülse verklebt ist.

5. Steckerstift (1) nach einem der vorhergehenden Ansprüche, wobei das Endstück (20) derart ausgestaltet ist, dass es wenigstens teilweise in die hohlzylindrische Hülse (10) eingreift.

6. Steckerstift (1) nach Anspruch 5, wobei zwischen einer Innenfläche der hohlzylindrischen Hülse (10) und einer zylinderförmigen Aussenfläche des Endstücks (20) ein Luftspalt (31) ausgebildet ist.

7. Steckerstift (1) nach einem der vorhergehenden Ansprüche, wobei der Innendurchmesser (14) der Hülse (10) gestuft ist und wenigstens zwei, vorzugsweise drei oder vier, insbesondere unterschiedliche Innendurchmesser (14, 14a, 14b, 14c) aufweist.

8. Steckerstift (1) nach einem der vorhergehenden Ansprüche, wobei die Hülse (10) und/oder das Endstück (20) ein keramisches Material, vorzugsweise Zirconiumdioxid, umfasst oder daraus besteht.

9. Steckerstift (1) nach einem der vorhergehenden Ansprüche, wobei die Hülse (10) eine Farbmarkierung aufweist, insbesondere eingefärbt ist.

10. Set umfassend mehrere Steckerstifte (1) nach einem der Ansprüche 1 bis 9, wobei die Bohrungsdurchmesser (23) der Endstücke (20) unterschiedlich dimensioniert und/oder toleriert sind.

11. Set nach Anspruch 10, wobei die Hülsen (10) eine Farbkodierung anhand der Dimension und/oder der Toleranz des Bohrungsdurchmessers (23) des Endstücks (20) aufweisen.

12. Faseroptischer Steckverbinder umfassend wenigstens einen Steckerstift (1) nach einem der Ansprüche 1 bis 9.

13. Verfahren zur Herstellung eines Steckerstifts (1) für einen faseroptischen Steckverbinder, insbesondere eines Steckerstifts (1) nach einem der Ansprüche 1 bis 9, umfassen die Schritte:
- Bereitstellen einer im Wesentlichen hohlzylinderförmigen Hülse (10) mit einer zentralen Hülsenachse (11) und einem Aussendurchmesser (12),
- Bereitstellen eines Endstücks (20) mit einer im Wesentlichen zentralen Bohrung (21) mit einer Bohrungsachse (22) und einem Bohrungsdurchmesser (23),
- Fixieren des Endstücks (20) an einer Stirnfläche (13) der Hülse (10) mittels eines Klebstoffes (30),
wobei die Bohrungsachse (22) mit der Hülsenachse (11) koaxial ausgerichtet werden, so dass eine Exzentrizität von weniger als 1.0 µm, bevorzugt weniger als 0.8 µm, besonders bevorzugt weniger als 0.5 µm, resultiert.

14. Verfahren nach Anspruch 13, wobei während des Aushärtens des Klebstoffs (30) die Bohrungsachse (22) mit der Hülsenachse (11) koaxial ausgerichtet gehalten wird.

15. Verfahren nach einem der Ansprüche 13 bis 14, wobei zum Ausrichten der Hülsenachse (11) mit der Bohrungsachse (22) das Endstück (20) auf einen Führungsstift (41) eines Referenzstiftes (40) aufgesetzt wird, der Referenzstift (40) von einer ersten Seite in eine geschlitzte Zentrierhülse (35) eingesetzt und anschliessend die Hülse (10) von einer zweiten Seite in die Zentrierhülse (35) eingeführt wird.

## Claims

1. Plug pin (1) for a fibre optic connector comprising a hollow cylindrical sleeve (10) with a central sleeve axis (11), an outer diameter (12) and an inner diameter (14) and an end piece (20) with a substantially central bore (21) with a bore axis (22) and a bore diameter (23), wherein the end piece (20) is arranged on an end face (13) of the sleeve (10) and forms an end face (25) of the plug pin (1), wherein the bore axis (22) is aligned coaxially with the sleeve axis (11) and has an eccentricity of less than 1.0 µm, preferably less than 0.8 µm, particularly preferably less than 0.5 µm, **characterised in that** the end piece (20) is bonded to the end face (13) of the sleeve (10).

2. Plug pin (1) according to claim 1, wherein the sleeve axis (11) has an angular offset of less than 0.3° to the bore axis (22), preferably less than 0.2°, particularly preferably less than 0.1°.

3. Plug pin (1) according to claim 1 or 2, wherein the outer diameter (12) of the sleeve (10) has a roundness of < 0.3 µm, preferably of < 0.2 µm, particularly preferably of < 0.1 pm.

4. Plug pin (1) according to one of the preceding claims, wherein the end piece (20) is exclusively bonded to the end face (13) of the sleeve.

5. Plug pin (1) according to one of the preceding claims, wherein the end piece (20) is configured such that it engages at least partially in the hollow cylindrical sleeve (10) .

6. Plug pin (1) according to claim 5, wherein an air gap (31) is formed between an inner surface of the hollow cylindrical sleeve (10) and a cylindrical outer surface of the end piece (20).

7. Plug pin (1) according to one of the preceding claims, wherein the inner diameter (14) of the sleeve (10) is stepped and has at least two, preferably three or four, in particular different inner diameters (14, 14a, 14b, 14c).

8. Plug pin (1) according to one of the preceding claims, wherein the sleeve (10) and/or the end piece (20) comprises or consists of a ceramic material, preferably zirconium dioxide.

9. Plug pin (1) according to one of the preceding claims, wherein the sleeve (10) has a colour marking, in particular is coloured.

10. A set comprising a plurality of plug pins (1) according to one of claims 1 to 9, wherein the bore diameters (23) of the end pieces (20) are differently dimensioned and/or toleranced.

11. The set according to claim 10, wherein the sleeves (10) have a colour coding based on the dimension and/or the tolerance of the bore diameter (23) of the end piece (20).

12. An optical fibre connector comprising at least one connector pin (1) according to any one of claims 1 to 9.

13. A method of manufacturing a connector pin (1) for a fibre optic connector, in particular a connector pin (1) according to any one of claims 1 to 9, comprising the steps of:
- Providing an essentially hollow cylindrical sleeve (10) with a central sleeve axis (11) and an outer diameter (12),
- Providing an end piece (20) with a substantially central bore (21) with a bore axis (22) and a bore diameter (23),
- Fixing the end piece (20) to an end face (13) of the sleeve (10) by means of an adhesive (30),
wherein the bore axis (22) is coaxially aligned with the sleeve axis (11) so that an eccentricity of less than 1.0 µm, preferably less than 0.8 µm, particularly preferably less than 0.5 µm, results.

14. Method according to claim 13, wherein the bore axis (22) is kept coaxially aligned with the sleeve axis (11) during the curing of the adhesive (30).

15. Method according to one of claims 13 to 14, wherein for aligning the sleeve axis (11) with the bore axis (22) the end piece (20) is placed on a guide pin (41) of a reference pin (40), the reference pin (40) is inserted from a first side into a slotted centring sleeve (35) and subsequently the sleeve (10) is inserted from a second side into the centring sleeve (35).

## Revendications

1. Broche de connexion (1) pour un connecteur à fibre optique comprenant une douille (10) en forme de cylindre creux avec un axe central de douille (11), un diamètre extérieur (12) et un diamètre intérieur (14) et la pièce d'extrémité (20) avec un alésage (21) sensiblement central avec un axe d'alésage (22) et un diamètre d'alésage (23), la pièce d'extrémité (20) étant disposé sur une face frontale (13) de la douille (10) et formant une surface d'extrémité (25) de la broche de connexion (1), l'axe d'alésage (22) étant orienté coaxialement avec l'axe de la douille (11) et présentant une excentricité inférieure à 1.0 µm, de préférence moins de 0,8 µm, de manière particulièrement préférée moins de 0,5 µm, **caractérisé en ce que** la pièce d'extrémité (20) est collée à la face frontale (13) de la douille (10).

2. Broche de connexion (1) selon la revendication 1, dans laquelle l'axe de la douille (11) présente par rapport à l'axe de l'alésage (22) un décalage angulaire de moins de 0,3°, de préférence de moins de 0,2°, de manière particulièrement préférée de moins de 0,1°.

3. Broche de connexion (1) selon la revendication 1 ou 2, dans laquelle le diamètre extérieur (12) de la douille (10) présente une circularité de < 0,3 µm, de préférence de < 0,2 µm, de manière particulièrement préférée de < 0,1 pm.

4. Broche de connexion (1) selon l'une des revendications précédentes, dans laquelle la pièce d'extrémité (20) est exclusivement collé à la face frontale (13) de la douille.

5. Broche de connexion (1) selon l'une quelconque des revendications précédentes, dans laquelle la pièce d'extrémité (20) est configuré pour s'engager au moins partiellement dans la douille (10).

6. Broche de connexion (1) selon la revendication 5, dans laquelle un espace d'air (31) est formé entre une surface intérieure de la douille cylindrique creuse (10) et une surface extérieure cylindrique de la pièce d'extrémité (20).

7. Broche de connexion (1) selon l'une des revendications précédentes, dans laquelle le diamètre intérieur (14) de la douille (10) est étagé et présente au moins deux, de préférence trois ou quatre, en particulier des diamètres intérieurs différents (14, 14a, 14b, 14c).

8. Broche de connexion (1) selon l'une quelconque des revendications précédentes, dans lequel la douille (10) et/ou la pièce d'extrémité (20) comprend ou est constitué d'un matériau céramique, de préférence de la zircone.

9. Broche de connexion (1) selon l'une des revendications précédentes, dans laquelle la douille (10) présente un marquage de couleur, en particulier est colorée.

10. Ensemble comprenant plusieurs broches de connexion (1) selon l'une des revendications 1 à 9, dans lequel les diamètres d'alésage (23) des pièces d'extrémité (20) sont dimensionnés et/ou tolérés différemment.

11. Ensemble selon la revendication 10, dans lequel les douilles (10) présentent un code couleur à l'aide de la dimension et/ou de la tolérance du diamètre d'alésage (23) de la pièce d'extrémité (20).

12. Connecteur à fibre optique comprenant au moins une broche de connexion (1) selon l'une des revendications 1 à 9.

13. Procédé de fabrication d'une broche de connexion (1) pour un connecteur à fibre optique, en particulier d'une broche de connexion (1) selon l'une des revendications 1 à 9, comprenant les étapes suivantes :
- fournir une douille (10) sensiblement en forme de cylindre creux avec un axe central de la douille (11) et un diamètre extérieur (12),
- fournir une pièce d'extrémité (20) ayant un alésage sensiblement central (21) avec un axe d'alésage (22) et un diamètre d'alésage (23),
- fixer la pièce d'extrémité (20) sur une face d'extrémité (13) de la douille (10) au moyen d'un adhésif (30),
l'axe d'alésage (22) étant aligné coaxialement avec l'axe de la douille (11), de sorte qu'il en résulte une excentricité inférieure à 1,0 µm, de préférence inférieure à 0,8 µm, de manière particulièrement préférée inférieure à 0,5 µm.

14. Procédé selon la revendication 13, dans lequel, pendant le durcissement de l'adhésif (30), l'axe d'alésage (22) est maintenu aligné coaxialement avec l'axe de la douille (11).

15. Procédé selon l'une des revendications 13 à 14, dans lequel, pour aligner l'axe de la douille (11) avec l'axe de l'alésage (22), on place la pièce d'extrémité (20) sur une tige de guidage (41) d'une tige de référence (40), on insère la tige de référence (40) par un premier côté dans une douille de centrage fendue (35), puis on introduit la douille (10) par un deuxième côté dans la douille de centrage (35).
